# EUROPÄISCHE PATENTSCHRIFT

(11) **EP 3 692 424 B1**
(45) Veröffentlichungstag und Bekanntmachung des Hinweises auf die Patenterteilung: **03.03.2021**
(21) Anmeldenummer: 19725351.1
(22) Anmeldetag: 17.05.2019
(51) Int. Cl.: G05B 19/042

(54) **VERFAHREN ZUM BEARBEITEN EINES SOFTWAREPROJEKTS**
METHOD FOR PROCESSING A SOFTWARE PROJECT
PROCÉDÉ DE TRAITEMENT D'UN PROJET DE LOGICIEL

(30) Priorität: 17.05.2018 DE 102018111930
(43) Veröffentlichungstag der Anmeldung: 12.08.2020
(73) Patentinhaber: Beckhoff Automation GmbH, 33415 Verl (DE)
(72) Erfinder: JANSSEN, Dirk, 33415 Verl (DE); BARTH, Ramon, 33415 Verl (DE); ZIEGLER, Thomas Robert, 33758 Schloß Holte-Stukenbrock (DE); SCHLOTTBOM, Michael Josef, 46348 Raesfeld (DE)
(74) Vertreter: Patentanwaltskanzlei WILHELM & BECK
(86) Internationale Anmeldenummer: PCT/EP2019/062779
(87) Internationale Veröffentlichungsnummer: WO 2019/219899

(56) Entgegenhaltungen:
- EP-A1- 3 173 884
- US-A1- 2003 061 311
- US-A1- 2017 277 742

## Beschreibung

Die Erfindung betrifft ein Verfahren zum Bearbeiten eines Softwareprojekts auf einer ersten Bearbeitungsstation, eine Bearbeitungsstation und ein Automatisierungssystem mit einer solchen Bearbeitungsstation.

Diese Anmeldung nimmt die Priorität der deutschen Patentanmeldung DE 10 2018 111 930.5 vom 17.05.2018 in Anspruch.

Softwareprojekte, wie beispielsweise Steuerungen für Automatisierungssysteme, werden immer komplexer. In vielen Fällen ist die Steuerungssoftware für ein Automatisierungssystem derart komplex, dass sowohl die Erstellung als auch die Veränderung des Softwareprojekts durch eine Mehrzahl von Nutzern erfolgt. Gleiches gilt auch für Softwareprojekte in anderen Bereichen, beispielsweise für Computerspiele und Office-Programme. Es müssen also Wege gefunden werden, wie mehrere Nutzer ein Softwareprojekt gleichzeitig bearbeiten können, ohne dass dabei durch Überschreiben bereits bearbeitete Stände verloren gehen. Dies kann beispielsweise durch die Bereitstellung einer Programmierumgebung auf einer Bearbeitungsstation erfolgen, wobei das Softwareprojekt aus Objekten besteht, die auf die Bearbeitungsstation heruntergeladen werden können und dabei ein Zeitstempel vergeben wird. Sollten nun zwei Bearbeiter dasselbe Objekt gleichzeitig bearbeiten und anschließend wieder in den Speicher hochladen, kann dies anhand der Zeitstempel erkannt werden. Anstelle des zeitlich späteren Uploads erfolgt dann eine Aufforderung an einen Nutzer, die veränderten Objekte zu begutachten und gegebenenfalls vor einem erneuten Hochladen weitere Veränderungen vorzunehmen. Ein solches Verfahren ist in der Druckschrift EP 2 811 352 A1 offenbart.

Darüber hinaus ist Software zur verteilten Versionsverwaltung von Dateien bekannt. Dabei kann entweder ein zentraler Server zur Speicherung der Versionen des Softwareprojekts verwendet werden oder, wie beispielsweise bei Git (https://de.wikipedia.org/wiki/Git) umgesetzt, durch dezentrale Verteilung der Versionsstände des Softwareprojekts.

Ferner gibt die Druckschrift US 2003 / 061 311 A1 ein Verfahren zum Bearbeiten eines Softwareprojekts an, bei dem ein Nutzer einen Primärcode herunterladen und verändern kann, anschließend aus dem veränderten Primärcode einen Maschinencode erzeugt und diesen dann in einen Speicher hochladen kann, wobei auch der veränderte Primärcode hochgeladen wird.

Eine Aufgabe der vorliegenden Erfindung ist es, ein verbessertes Verfahren zum Bearbeiten eines Softwareprojekts bereitzustellen. Eine weitere Aufgabe der Erfindung ist es, eine Bearbeitungsstation, auf der das Verfahren durchgeführt werden kann, sowie ein Automatisierungssystem, in das eine solche Bearbeitungsstation integriert ist, zur Verfügung zu stellen.

Diese Aufgaben werden durch das Verfahren und die Vorrichtungen der unabhängigen Patentansprüche gelöst. Weiterbildungen sind in den abhängigen Ansprüchen angegeben.

In einem Verfahren zum Bearbeiten eines aus einem Primärcode und einem Maschinencode bestehenden Softwareprojekts durch einen ersten Nutzer werden die folgenden Verfahrensschritte in der angegebenen Reihe durchgeführt, wobei die Bearbeitung auf einer ersten Bearbeitungsstation erfolgt. Zunächst wird eine erste Kopie des Primärcodes aus einem ersten Speicher auf die erste Bearbeitungsstation heruntergeladen. Der Primärcode umfasst dabei alle Dateien, die vom ersten Nutzer direkt bearbeitet werden können. Anschließend wird die erste Kopie des Primärcodes durch den ersten Nutzer verändert. Dazu kann der erste Nutzer die Ressourcen, die ihm die erste Bearbeitungsstation zur Verfügung stellt, nutzen. Anschließend wird eine erste Programmversion des Maschinencodes aus der ersten, veränderten Kopie des Primärcodes erzeugt. Der Maschinencode umfasst alle Dateien, die bei der Ausführung des Softwareprojekts durch einen Rechner verwendet werden. Der Maschinencode ist also die lauffähige Version des Softwareprojekts, während der Primärcode eine programmierbare Form des Softwareprojekts ist. An die Erzeugung der ersten Programmversion des Maschinencodes anschließend wird die erste Programmversion des Maschinencodes in einen zweiten Speicher hochgeladen. Der zweite Speicher kann dabei einem Rechner zugeordnet sein, auf dem das Softwareprojekt ausgeführt werden soll. Das Hochladen der ersten Programmversion des Maschinencodes kann dabei durch eine Eingabe des ersten Nutzers ausgelöst werden, wenn der erste Nutzer der Ansicht ist, eine entsprechende, lauffähige Programmversion des Maschinencodes zur Verfügung zu haben. Ausgelöst durch das Hochladen der ersten Programmversion des Maschinencodes in den zweiten Speicher wird die veränderte Kopie des Primärcodes in den ersten Speicher automatisch hochgeladen.

Der erste Nutzer muss also nicht selbst daran denken, die von ihm veränderte Kopie des Primärcodes, die beispielsweise die veränderte erste Kopie des Primärcodes sein kann, in den ersten Speicher nach der Bearbeitung hochzuladen. Dadurch kann erreicht werden, dass im ersten Speicher die zum im zweiten Speicher abgelegten ausführbaren Maschinencode gehörigen Dateien des Primärcodes für weitere Nutzer bereitgestellt werden. Ein weiterer Nutzer könnte sich nun den veränderten Primärcode auf seine Bearbeitungsstation herunterladen und dort weitere Veränderungen vornehmen. Auch wenn dieser Nutzer nun eine weitere lauffähige Programmversion des Maschinencodes in den zweiten Speicher hochlädt, wird der veränderte Primärcode automatisch im ersten Speicher abgelegt. Dadurch wird die Versionsverwaltung während der Programmierung oder während der Überarbeitung des Softwareprojekts deutlich vereinfacht, da sich die Nutzer, beispielsweise die Programmierer, nur darum kümmern müssen, die lauffähigen Programmversionen des Maschinencodes in den zweiten Speicher hochzuladen. Die durch die Nutzer veränderten Dateien des Primärcodes werden automatisch in den ersten Speicher hochgeladen.

Ferner wird zusätzlich überprüft, ob zwischen dem Herunterladen der ersten Kopie des Primärcodes und dem Hochladen der ersten Programmversion des Maschinencodes in den zweiten Speicher eine aus einer zweiten Kopie des Primärcodes erzeugte zweite Programmversion des Maschinencodes in den zweiten Speicher hochgeladen wurde. Dies wäre beispielsweise der Fall, wenn gleichzeitig zum ersten Nutzer ein zweiter Nutzer ausgehend von derselben oder einer früheren Primärcodeversion eine Programmversion des Maschinencodes in den zweiten Speicher hochgeladen hätte. Falls bei der Überprüfung festgestellt wird, dass eine zweite Programmversion des Maschinencodes in den zweiten Speicher hochgeladen wurde, wird eine veränderte zweite Kopie des Primärcodes aus dem ersten Speicher auf die erste Bearbeitungsstation heruntergeladen und eine Aufforderung an den ersten Nutzer, die erste Kopie des Primärcodes und die zweite Kopie des Primärcodes zu einer dritten Kopie des Primärcodes zusammenzuführen, ausgegeben.

Nach der Ausgabe der Aufforderung wird einer der beiden im Folgenden beschriebenen Alternativen ausgeführt.

Entweder wird eine dritte Programmversion des Maschinencodes aus der dritten Kopie des Primärcodes erzeugt. Daran anschließend wird die dritte Programmversion des Maschinencodes in den zweiten Speicher hochgeladen. Das automatische Hochladen der veränderten Kopie des Primärcodes in den ersten Speicher ist dabei als Hochladen der dritten Kopie des Primärcodes in den ersten Speicher ausgestaltet. Das Überprüfen, ob eine veränderte Programmversion des Maschinencodes hochgeladen wurde, kann also bereits vor dem automatischen Hochladen der veränderten Kopie des Primärcodes erfolgen, da ein Hochladen der durch den ersten Nutzer veränderten ersten Kopie des Primärcodes in diesem Fall nicht zwingend erforderlich ist.

Oder es wird die zweite Programmversion mit der ersten Programmversion überschrieben, ausgelöst durch eine Reaktion des ersten Nutzers auf die ausgegebene Aufforderung. Das automatische Hochladen der veränderten Kopie des Primärcodes in den ersten Speicher ist dabei als Hochladen der veränderten ersten Kopie des Primärcodes in den ersten Speicher ausgestaltet. Es kann beispielsweise vorgesehen sein, dass die erste Bearbeitungsstation einen Warnhinweis an den ersten Nutzer ausgibt. Dieser Warnhinweis dient dazu, dem ersten Nutzer zu signalisieren, dass ein Hochladen der ersten Programmversion zu einem Überschreiben des durch einen zweiten Nutzer erstellten Stands des Softwareprojekts führen würde. Nach Prüfung der ersten Kopie und der zweiten Kopie des Primärcodes kann der erste Nutzer diesen Warnhinweis jedoch durch eine Nutzereingabe aufheben.

Alternativ kann es jedoch vorgesehen sein, dass beim Hochladen der ersten Programmversion des Maschinencodes sowohl die veränderte erste Kopie des Primärcodes automatisch hochgeladen wird und anschließend nach der Überprüfung die dritte Kopie des Primärcodes ebenfalls automatisch in den ersten Speicher hochgeladen wird, ausgelöst durch das Hochladen dritten Programmversion des Maschinencodes.

In einer Ausführungsform des Verfahrens wird das Hochladen der ersten Programmversion des Maschinencodes abgebrochen, bevor die Aufforderung an den ersten Nutzer ausgegeben wird. Dadurch kann Übertragungsbandbreite zwischen der ersten Bearbeitungsstation und dem zweiten Speicher eingespart werden. Alternativ oder zusätzlich kann vorgesehen sein, dass die veränderte erste Kopie des Primärcodes automatisch in jedem Fall in den ersten Speicher hochgeladen wird und bei Feststellung, dass eine zweite Programmversion des Maschinencodes hochgeladen wurde, kann das Hochladen der veränderten ersten Kopie des Primärcodes in den ersten Speicher ebenfalls abgebrochen werden.

In einer Ausführungsform erfolgt das Überprüfen anhand eines Zeitstempels der Programmversion des Maschinencodes. Dieser Zeitstempel kann beispielsweise bei der Erzeugung der Programmversion des Maschinencodes in den Maschinencode integriert werden und sich auf den Zeitpunkt des Herunterladens der Kopie des Primärcodes beziehen.

In einer Ausführungsform erfolgt das Überprüfen anhand eines Hash-Werts der Programmversion des Maschinencodes. Dabei wird ein Hash-Wert der im zweiten Speicher befindlichen Programmversion während des Herunterladens der ersten Kopie des Primärcodes erzeugt und anschließend mit einem Hash-Wert der Programmversion des Maschinencodes während dem Hochladen der ersten Programmversion des Maschinencodes in den zweiten Speicher verglichen. Sollte in der Zwischenzeit ein weiterer Nutzer eine zweite Programmversion des Maschinencodes in den zweiten Speicher hochgeladen haben, stimmen die Hash-Werte nicht mehr überein und es kann somit festgestellt werden, dass die zweite Programmversion des Maschinencodes in den zweiten Speicher hochgeladen wurde.

In einer Ausführungsform erfolgt das Erzeugen der Programmversionen des Maschinencodes durch ein Kompilieren der Kopien des Primärcodes. Dies stellt ein gängiges Verfahren zum Erzeugen von Maschinencode (maschinenlesbarer Code) aus Primärcode dar.

In einer Ausführungsform umfasst das Softwareprojekt eine Konfigurationsdatei. Die Konfigurationsdatei ist ein Teil des Primärcodes. Ferner wird die Konfigurationsdatei in die Programmversionen des Maschinencodes integriert. Das Verändern der ersten Kopie des Primärcodes umfasst eine Veränderung der Konfigurationsdatei. Die veränderte Konfigurationsdatei wird ebenfalls in den zweiten Speicher hochgeladen. Das Integrieren der Konfigurationsdatei in den Maschinencode kann beispielsweise durch ein Aufrufen der Konfigurationsdatei durch den Maschinencode erfolgen. Dies kann beispielsweise vorteilhaft sein, wenn das Softwareprojekt derart ausgestaltet ist, dass zwar einzelne Parameter verändert werden können müssen, dies jedoch keine erheblichen Auswirkungen auf die Softwarearchitektur des Maschinencodes hat. Solche Parameter können dann in der Konfigurationsdatei bereitgestellt werden, wobei die Konfigurationsdatei einerseits als Teil des Primärcodes verändert werden kann und anderseits die Konfigurationsdatei vom Maschinencode ausgelesen wird, damit der Parameter beim Ausführen des Maschinencodes entsprechend berücksichtigt werden kann.

In einer Ausführungsform des Verfahrens sind im ersten Speicher mehrere Primärcodeversionen abgelegt. An der ersten Bearbeitungsstation ist eine Anzeige der im ersten Speicher abgelegten Primärcodeversionen abrufbar. Dadurch kann der erste Nutzer während der Bearbeitung des Softwareprojekts auf frühere Stände des Primärcodes zurückgreifen. Dies ermöglicht eine flexiblere Programmierung und kann zusätzlich eine erste Instanz einer Datensicherung darstellen.

In einer Ausführungsform des Verfahrens werden eine oder mehrere Primärcodeversionen aus dem ersten Speicher mit einem dritten Speicher gemäß einer Vorgabe synchronisiert. Die Vorgabe kann dabei insbesondere eine Nutzereingabe oder eine automatische Vorgabe sein. Beispielsweise können so automatisiert wöchentlich die Primärcodeversionen in einem dritten Speicher gesichert werden, was zur Datensicherung dient. Gleichzeitig kann der erste Nutzer, wenn er der Ansicht ist, einen Meilenstein während der Programmierung des Softwareprojekts erreicht zu haben, durch eine Nutzereingabe eine Synchronisierung der Primärcodeversionen aus dem ersten Speicher mit dem dritten Speicher auslösen.

In einer Ausführungsform des Verfahrens ist das Softwareprojekt ein Automatisierungsprojekt, wobei der Maschinencode zur Steuerung einer Automatisierungskomponente dient. Der zweite Speicher ist in der Automatisierungskomponente angeordnet. Das bedeutet, dass der zweite Speicher für den Maschinencode zum Abspeichern der Programmversion des Maschinencodes, der zur Steuerung der Automatisierungskomponente dient, in einem Speicher in der Automatisierungskomponente angeordnet ist. Dadurch wird eine einfache Systemarchitektur erreicht. Der erste Speicher kann dabei außerhalb der Automatisierungskomponente angeordnet sein, beispielsweise auf einem zentralen Dateiserver.

In einer Ausführungsform des Verfahrens ist der erste Speicher in der Automatisierungskomponente angeordnet. Dann kann über die Automatisierungskomponente sowohl der Primärcode aus einem ersten Speicher bereitgestellt werden und andererseits der lesbare Maschinencode in den zweiten Speicher der Automatisierungskomponente hochgeladen werden. In diesem Fall können der erste Speicher und der zweite Speicher als ein physikalisches Speichermedium, beispielsweise eine Festplatte oder ein Flash-Speicher, innerhalb der Automatisierungskomponente ausgestaltet sein.

Eine Bearbeitungsstation weist eine Datenschnittstelle und eine Eingabemöglichkeit für einen Nutzer auf. Die Bearbeitungsstation ist eingerichtet, eines der genannten Verfahren durchzuführen. Dies bedeutet insbesondere, dass auf der Bearbeitungsstation ein Computerprogramm lauffähig ist, welches mit dem ersten Nutzer derart interagiert, dass die von der ersten Bearbeitungsstation ausgeführten Bearbeitungsschritte durchgeführt werden können. Während der Durchführung des Verfahrens kann der erste Nutzer Veränderungen, beispielsweise am Primärcode, vornehmen, wobei diese Veränderungen nicht von der Bearbeitungsstation ausgeführt werden. Anschließend wird aus dem veränderten Primärcode der Maschinencode erzeugt, und die automatisierte Versionsverwaltung über das Hochladen des veränderten Primärcodes in den ersten Speicher kann erfolgen.

Die Bearbeitungsstation kann eine Anzeige aufweisen, mit der dem ersten Nutzer Informationen angezeigt werden. Alternativ oder zusätzlich kann die Bearbeitungsstation als Server ausgestaltet sein, der einen Zugriff mit einem weiteren Rechner von außerhalb der Bearbeitungsstation ermöglicht. Dieser Zugriff auf den Server stellt dann die Eingabemöglichkeit für den ersten Nutzer dar.

Ein Automatisierungssystem umfasst einen ersten Speicher, eine Automatisierungskomponente mit einem zweiten Speicher und mindestens eine solche Bearbeitungsstation. Das Automatisierungssystem kann dabei Auslesemöglichkeiten für Sensoren umfassen und Steuersignale für Aktoren bereitstellen. Der Maschinencode dient zur Steuerung der Automatisierungskomponente, wobei die Steuerung anhand der ausgelesenen Sensoren erfolgen kann und zur Ausgabe von Signalen an die Aktoren führen kann. Eine erste Kommunikationsverbindung ist zwischen dem ersten Speicher und der Bearbeitungsstation eingerichtet. Eine zweite Kommunikationsverbindung ist zwischen der Bearbeitungsstation und dem zweiten Speicher eingerichtet. Dadurch kann der Primärcode aus dem ersten Speicher auf die Bearbeitungsstation heruntergeladen und nach einem Verändern des Primärcodes von der Bearbeitungsstation in den zweiten Speicher hochgeladen werden. Der dann im zweiten Speicher befindliche Maschinencode kann dann von der Automatisierungskomponente ausgeführt werden.

Die Erfindung wird nachfolgend anhand von Ausführungsbeispielen und unter Bezugnahme auf Figuren näher erläutert. Dabei zeigen jeweils in schematischer Darstellung
- Fig. 1: ein Ablaufdiagramm einer ersten Ausführungsform des Verfahrens;
- Fig. 2: einen zeitlichen Ablaufplan der ersten Ausführungsform des Verfahrens;
- Fig. 3: ein Ablaufdiagramm einer zweiten Ausführungsform des Verfahrens;
- Fig. 4: einen zeitlichen Ablaufplan der zweiten Ausführungsform des Verfahrens;
- Fig. 5: ein Ablaufdiagramm einer Integration des Verfahrens in ein Verfahren zum Aktualisieren von gespeichertem Primärcode;
- Fig. 6: ein Ablaufdiagramm, bei dem die Verfahrensschritte ebenfalls in ein Verfahren zum Aktualisieren eines Speichers eines Primärcodes integriert sind;
- Fig. 7: ein Softwareprojekt bestehend aus Primärcode und Maschinencode, umfassend eine Konfigurationsdatei;
- Fig. 8: einen zeitlichen Ablaufplan einer weiteren Ausführungsform des Verfahrens mit einem zusätzlichen Synchronisierungsschritt;
- Fig. 9: eine Bearbeitungsstation;
- Fig. 10: ein Automatisierungssystem mit einer Automatisierungskomponente und einer Bearbeitungsstation und
- Fig. 11: ein weiteres Ausführungsbeispiel eines solchen Automatisierungssystems.

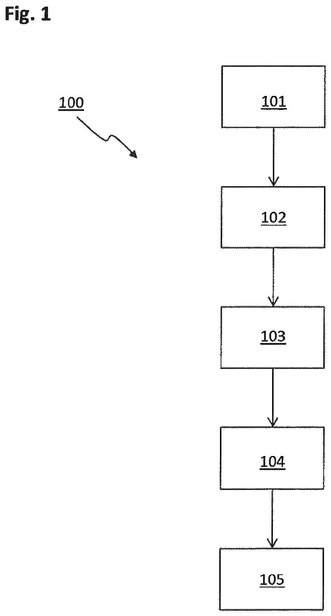

Fig. 1 zeigt ein Ablaufdiagramm 100 eines Verfahrens zum Bearbeiten eines aus einem Primärcode und einem Maschinencode bestehenden Softwareprojekts auf einer ersten Bearbeitungsstation durch einen ersten Nutzer. In einem ersten Verfahrensschritt 101 wird dabei eine erste Kopie des Primärcodes aus einem ersten Speicher auf die erste Bearbeitungsstation heruntergeladen. In einem zweiten Verfahrensschritt 102 wird die erste Kopie des Primärcodes verändert. In einem dritten Verfahrensschritte 103 wird eine erste Programmversion des Maschinencodes aus der ersten Kopie des Primärcodes erzeugt. In einem vierten Verfahrensschritt 104 wird die erste Programmversion des Maschinencodes in einen zweiten Speicher hochgeladen. In einem fünften Verfahrensschritt 105 wird die veränderte Kopie des Primärcodes automatisch in den ersten Speicher hochgeladen, ausgelöst durch das Hochladen der ersten Programmversion des Maschinencodes in den zweiten Speicher. Bei der im fünften Verfahrensschritt 105 hochgeladenen veränderten Kopie des Primärcodes kann es sich dabei um die veränderte erste Kopie des Primärcodes handeln. Die Bearbeitungsstation, auf der das Verfahren durchgeführt wird, kann dabei derart programmiert sein, dass das Herunterladen der ersten Kopie des Primärcodes im ersten Verfahrensschritt 101, die Erzeugung einer ersten Programmversion des Maschinencodes im dritten Verfahrensschritt 103 und das Hochladen der ersten Programmversion des Maschinencodes in einen zweiten Speicher im vierten Verfahrensschritt 104 durch Nutzereingaben des ersten Nutzers ausgelöst wird und das Verändern der ersten Kopie des Primärcodes im zweiten Verfahrensschritt 102 durch den ersten Nutzer erfolgt. Die Bearbeitungsstation stellt dabei dem ersten Nutzer Mittel zur Verfügung, die Änderung des Primärcodes vorzunehmen, beispielsweise über eine Eingabemaske und/oder eine Programmieroberfläche. Sobald der durch den ersten Nutzer ausgelöste vierte Verfahrensschritt 104, also das Hochladen der ersten Programmversion des Maschinencodes erfolgt, erfolgt zusätzlich das automatische Hochladen der veränderten Kopie des Primärcodes in den ersten Speicher im fünften Verfahrensschritt 105, sodass sich der erste Nutzer um diesen Verfahrensschritt nicht selbst kümmern muss, sondern dieser fünfte Verfahrensschritt 105 von der ersten Bearbeitungsstation automatisch ausgeführt wird.

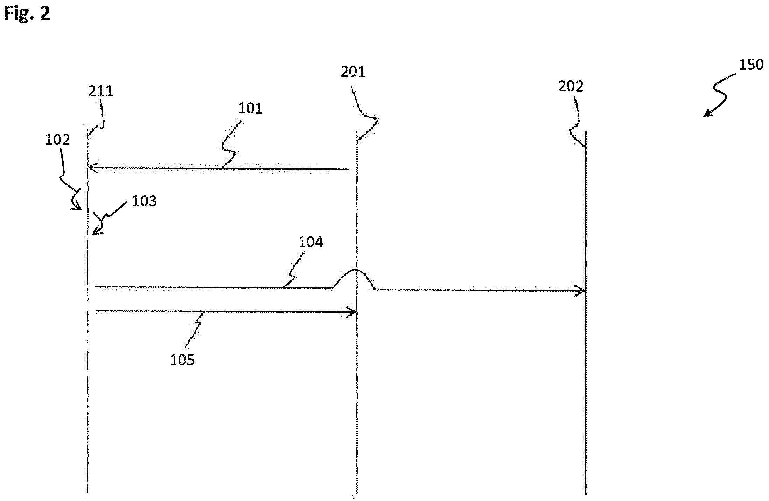

Fig. 2 zeigt einen zeitlichen Ablaufplan 150 der Verfahrensschritte 101 bis 105 des Verfahrens der Fig. 1 und die Interaktionen der ersten Bearbeitungsstation 211 mit dem ersten Speicher 201 und dem zweiten Speicher 202. Der zeitliche Ablauf der Verfahrensschritte 101 bis 105 erfolgt dabei von oben nach unten. Im ersten Verfahrensschritt 101 wird eine erste Kopie des Primärcodes aus dem ersten Speicher 201 auf die erste Bearbeitungsstation 211 heruntergeladen. Im zweiten Verfahrensschritt 102 wird die erste Kopie des Primärcodes auf der ersten Bearbeitungsstation 211 verändert. Im dritten Verfahrensschritt 103 wird eine erste Programmversion des Maschinencodes aus der ersten, veränderten Kopie des Primärcodes erzeugt. Diese erste Programmversion wird anschließend im vierten Verfahrensschritt 104 in den zweiten Speicher 202 hochgeladen. Ausgelöst durch das Hochladen der ersten Programmversion des Maschinencodes in den zweiten Speicher 202 im vierten Verfahrensschritt 104 wird im fünften Verfahrensschritt 105 die veränderte Kopie des Primärcodes in den ersten Speicher 201 automatisch hochgeladen.

Der erste Speicher 201 und der zweite Speicher 202 können dabei sowohl an unterschiedlicher physikalischer Stelle, beispielsweise auf unterschiedlichen Servern, als auch an derselben physikalischen Stelle, beispielsweise auf demselben Server oder sogar auf derselben Festplatte beziehungsweise demselben Flash-Speicher liegen. Der im zweiten Speicher 202 abgelegte Maschinencode umfasst dabei die ausführbare Programmversion des Softwareprojekts, während die im ersten Speicher 201 abgelegte Primärcodeversion die Quelldateien des Softwareprojekts umfasst.

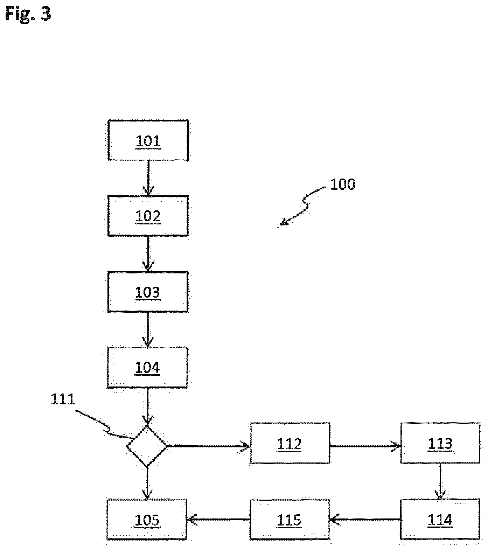

Fig. 3 zeigt ein Ablaufdiagramm 100 einer zweiten Ausgestaltung des Verfahrens. Die ersten vier Verfahrensschritte 101 bis 104 entsprechen dabei den Verfahrensschritten des Ausführungsbeispiels der Fig. 1. Nach dem im vierten Verfahrensschritt 104 erfolgten Hochladen der ersten Programmversion des Maschinencodes wird in einem ersten Überprüfungsschritt 111 überprüft, ob zwischen dem Herunterladen der ersten Kopie des Primärcodes im ersten Verfahrensschritt 101 und dem Hochladen der ersten Programmversion des Maschinencodes im vierten Verfahrensschritt 104 eine aus einer zweiten Kopie des Primärcodes erzeugte zweite Programmversion des Maschinencodes in den zweiten Speicher hochgeladen wurde. Sollte dies nicht der Fall gewesen sein, wird anschließend automatisch der fünfte Verfahrensschritt 105 des Ausführungsbeispiels der Fig. 1, also das automatische Hochladen der veränderten Kopie des Primärcodes in den ersten Speicher ausgeführt. Sollte die Überprüfung im ersten Überprüfungsschritt 111 jedoch ergeben, dass eine zweite Programmversion des Maschinencodes in den zweiten Speicher hochgeladen wurde, so wird anschließend in einem sechsten Verfahrensschritt 112 eine veränderte zweite Kopie des Primärcodes aus dem ersten Speicher heruntergeladen. In einem siebten Verfahrensschritt 113 wird eine Aufforderung an den ersten Nutzer ausgegeben, die erste Kopie des Primärcodes und die zweite Kopie des Primärcodes zu einer dritten Kopie des Primärcodes zusammenzuführen. In einem achten Verfahrensschritt 114 wird anschließend eine dritte Programmversion des Maschinencodes aus der dritten Kopie des Primärcodes erzeugt. Dies kann dadurch erfolgen, dass der erste Nutzer der Aufforderung aus dem siebten Verfahrensschritt 113 nachgeht. In einem neunten Verfahrensschritt 115 wird anschließend die dritte Programmversion des Maschinencodes in den zweiten Speicher hochgeladen. Anschließend erfolgt der fünfte Verfahrensschritt 105, bei dem das automatische Hochladen der veränderten Kopie des Primärcodes in den ersten Speicher als Hochladen der dritten Kopie des Primärcodes in den ersten Speicher ausgestaltet ist.

Zusätzlich kann vorgesehen sein, dass vor oder nach dem ersten Überprüfungsschritt 111 die veränderte erste Kopie des Primärcodes zusätzlich in den ersten Speicher hochgeladen wird. Ferner kann vorgesehen sein, dass das Hochladen der ersten Programmversion im vierten Verfahrensschritt 104 abgebrochen wird, falls die Überprüfung im ersten Überprüfungsschritt 111 ergibt, dass eine zweite Programmversion des Maschinencodes in den zweiten Speicher hochgeladen wurde.

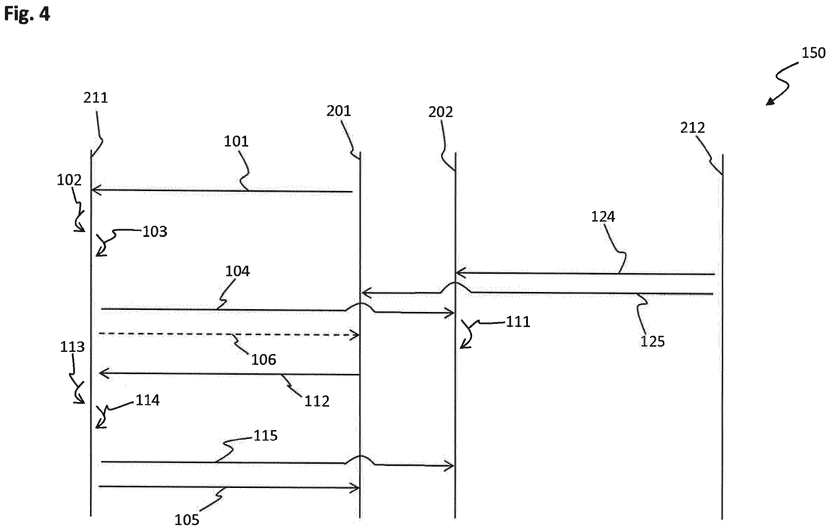

Fig. 4 zeigt den zeitlichen Ablauf 150 des Verfahrens der Fig. 3. Dabei entsprechen der erste Speicher 201, der zweite Speicher 202 und die erste Bearbeitungsstation 211 den entsprechenden Vorrichtungen der Fig. 2. Die Verfahrensschritte 101 bis 104 werden zum zeitlichen Ablauf der Fig. 2 analog ausgeführt, der zeitliche Ablauf der Verfahrensschritte erfolgt wieder von oben nach unten. Zwischen dem Herunterladen der ersten Kopie des Primärcodes im ersten Verfahrensschritt 101 und dem Hochladen der ersten Programmversion im vierten Verfahrensschritt 104 wurde eine zweite Programmversion von einer zweiten Bearbeitungsstation 212 in den zweiten Speicher 202 in einem weiteren vierten Verfahrensschritt 124 hochgeladen. In einem weiteren fünften Verfahrensschritt 125 wurde eine zweite Kopie des Primärcodes in den ersten Speicher 201 hochgeladen. Im ersten Überprüfungsschritt 111 wird nun überprüft, ob im zweiten Speicher 202 eine zweite Programmversion des Maschinencodes hochgeladen wurde. Da dies der Fall ist, wird nun im sechsten Verfahrensschritt 112 die zweite Kopie des Primärcodes auf die erste Bearbeitungsstation 211 heruntergeladen. Anschließend wird im siebten Verfahrensschritt 113 eine Aufforderung an den Nutzer ausgegeben, die von ihm im zweiten Verfahrensschritt 102 veränderte erste Kopie des Primärcodes und die im sechsten Verfahrensschritt 112 heruntergeladene zweite Kopie des Primärcodes zusammenzuführen. Anschließend wird im achten Verfahrensschritt 114 eine dritte Programmversion des Maschinencodes aus der dritten Kopie des Primärcodes erzeugt. Daran anschließend wird im neunten Verfahrensschritt 115 die dritte Programmversion des Maschinencodes in den zweiten Speicher 202 hochgeladen. Automatisch ausgelöst durch den neunten Verfahrensschritt 115 wird der fünfte Verfahrensschritt 105 ausgeführt, bei dem die dritte Kopie des Primärcodes als veränderte Kopie des Primärcodes in den ersten Speicher 201 hochgeladen wird.

Zusätzlich in Fig. 4 gestrichelt dargestellt ist ein weiterer Hochladeschritt 106, bei dem unabhängig vom ersten Überprüfungsschritt 111 die veränderte erste Kopie des Primärcodes in den ersten Speicher 201 hochgeladen wird. Dieser Verfahrensschritt ist optional und kann der Bereitstellung sämtlicher veränderter Primärcodeversionen im ersten Speicher 201 dienen.

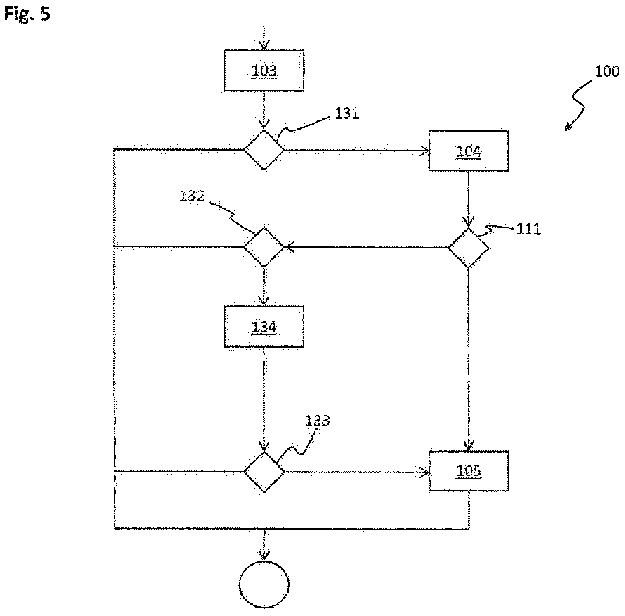

Fig. 5 zeigt ein Ablaufdiagramm 100, welches mehrere der Verfahrensschritte des Ablaufdiagramms der Fig. 3 enthält und bei dem weitere Verfahrensschritte ausgeführt werden. Nach dem dritten Verfahrensschritt 103, also dem Erzeugen der ersten Programmversion des Maschinencodes aus der ersten Kopie des Primärcodes wird in einem zweiten Überprüfungsschritt 131 überprüft, ob die Erzeugung erfolgreich war. Wenn dies nicht der Fall ist, wird das Verfahren abgebrochen. Das Ende des Verfahrens ist im Ablaufdiagramm 100 der Fig. 5 als ein Kreis symbolisiert. Wenn die Erzeugung erfolgreich war, wird anschließend der vierte Verfahrensschritt 104, also das Hochladen der ersten Programmversion des Maschinencodes in den zweiten Speicher ausgeführt. Anschließend erfolgt der erste Überprüfungsschritt 111. Sollte sich im ersten Überprüfungsschritt 111 ergeben, dass keine zweite Programmversion des Maschinencodes hochgeladen wurde, erfolgt der fünfte Verfahrensschritt 105 analog zum in Fig. 3 beschriebenen Ablauf. Anstelle der Ausgabe der Aufforderung an den ersten Nutzer und dem Herunterladen der veränderten zweiten Kopie des Primärcodes erfolgt im Ablaufdiagramm 100 der Fig. 5, falls im Überprüfungsschritt 111 festgestellt wurde, dass eine zweite Programmversion des Maschinencodes in den zweiten Speicher hochgeladen wurde, ein erster Entscheidungsschritt 132, in dem der erste Nutzer entscheiden kann, ob er die zweite Programmversion mit der ersten Programmversion überschreiben möchte. Wenn dies nicht der Fall ist, wird das Verfahren abgebrochen. Wenn dies der Fall ist, erfolgt ein Überschreibungsschritt 134, bei dem die erste Programmversion in den zweiten Speicher hochgeladen sowie die zweite Programmversion aus dem zweiten Speicher gelöscht wird. Anschließend wird in einem dritten Überprüfungsschritt 133 überprüft, ob das Überschreiben der zweiten Programmversion erfolgreich war. Wenn dies nicht der Fall ist, wird das Verfahren abgebrochen. Wenn das Überschreiben der zweiten Programmversion des Maschinencodes erfolgreich war, wird automatisch der fünfte Verfahrensschritt 105, also das Hochladen der veränderten ersten Kopie des Primärcodes in den ersten Speicher ausgeführt.

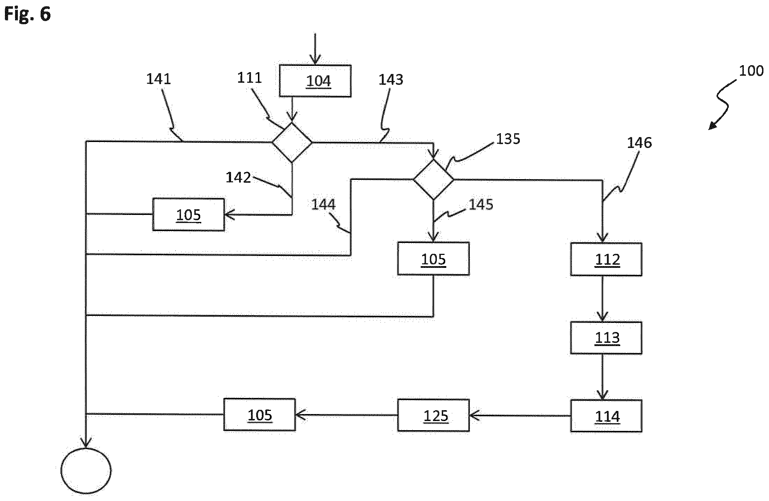

Fig. 6 zeigt ein weiteres Ablaufdiagramm 100, welches mehrere der Verfahrensschritte des Ablaufdiagramms der Fig. 3 enthält und bei dem weitere Verfahrensschritte ausgeführt werden. Nach dem vierten Verfahrensschritt 104 wird zunächst der erste Überprüfungsschritt 111 ausgeführt. Dabei kann sich auf einem ersten Pfad 141 ergeben, dass die erste Programmversion bereits mit der im zweiten Speicher hinterlegten Programmversion übereinstimmt und folglich das Verfahren abgebrochen werden kann. Das Ende des Verfahrens ist im Ablaufdiagramm 100 der Fig. 6 als ein Kreis symbolisiert. Ferner kann sich im ersten Überprüfungsschritt 111 ein zweiter Pfad 142 ergeben, der dem Fall entspricht, dass keine zweite Programmversion in den zweiten Speicher hochgeladen wurde und deshalb das Hochladen der ersten Programmversion im vierten Verfahrensschritt 104 erfolgreich war. Anschließend wird der fünfte Verfahrensschritt 105, also das Hochladen der veränderten Kopie des Primärcodes in den ersten Speicher, ausgeführt. Sollte sich im ersten Überprüfungsschritt 111 ergeben, dass eine zweite Programmversion in den zweiten Speicher hochgeladen wurde, so geht das Verfahren über den dritten Pfad 143 in einen zweiten Entscheidungsschritt 135 über. Der erste Nutzer wird nun vor die Wahl gestellt, ob er in einem vierten Pfad 144 seine Änderungen verwerfen möchte. Dann wird das Verfahren abgebrochen und seine Kopie des Primärcodes nicht in den ersten Speicher hochgeladen. Ferner kann im vierten Pfad 144 ein Verfahrensschritt vorgesehen sein, bei dem auch die erste Programmversion aus dem vierten Verfahrensschritt 104 verworfen wird. Ferner wird dem ersten Nutzer über den fünften Pfad 145 die Möglichkeit bereitgestellt, die zweite Programmversion des zweiten Nutzers zu verwerfen. Dann wird der fünfte Verfahrensschritt 105 ausgeführt und die veränderte erste Kopie des Primärcodes in den ersten Speicher hochgeladen. Über den sechsten Pfad 146 gelangt der erste Nutzer zu einer dritten Alternative, nämlich dem Zusammenführen der beiden Programmversionen wie bereits für Fig. 3 in den Verfahrensschritten 112 bis 115 sowie dem daran anschließenden Verfahrensschritt 105 beschrieben.

In einem Ausführungsbeispiel erfolgt das Überprüfen, ob die im zweiten Speicher befindlichen Programmversionen des Maschinencodes unterschiedlich sind, über einen Zeitstempel der Programmversionen des Maschinencodes. Beim Herunterladen der ersten Kopie des Primärcodes wird dabei der Zeitstempel des Hochladens von Primärcode und Maschinencode mit übertragen. Wenn beim Hochladen des Maschinencodes der bereits im zweiten Speicher befindliche Maschinencode ebenfalls diesen Zeitstempel aufweist, wurde der Maschinencode in der Zwischenzeit nicht geändert, so dass mit dem Hochladen der veränderten Kopie des Primärcodes fortgefahren werden kann.

In einem Ausführungsbeispiel erfolgt das Überprüfen anhand eines Hash-Wertes der Programmversionen des Maschinencodes. Wenn beim Hochladen der erzeugten Programmversion des Maschinencodes der Hash-Wert der Programmversion des bereits im zweiten Speicher befindlichen Maschinencodes dem Hash-Wert des Maschinencodes beim Herunterladen der ersten Kopie des Primärcodes entspricht, dann wurde in der Zwischenzeit keine neue Programmversion des Maschinencodes in den zweiten Speicher hochgeladen.

In einer Ausführungsform erfolgt die Erzeugung der Programmversionen, beispielsweise der ersten und/oder der zweiten und/oder der dritten Programmversion, im vierten Verfahrensschritt 104 beziehungsweise im achten Verfahrensschritt 114 durch ein Kompilieren der Kopien des Primärcodes.

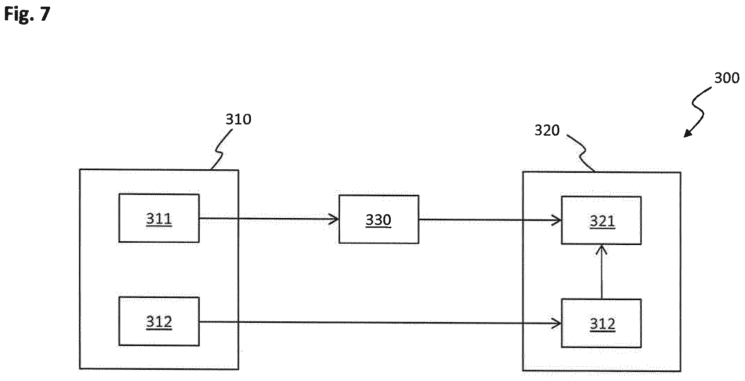

Fig. 7 zeigt ein Softwareprojekt 300, bestehend aus einem Primärcode 310 und einem Maschinencode 320. Der Primärcode 310 umfasst dabei eine oder mehrere Quelldateien 311 sowie eine Konfigurationsdatei 312. Wenn nun im vierten Verfahrensschritt beziehungsweise im achten Verfahrensschritt der Maschinencode 320 erzeugt werden soll, werden die Quelldateien 311 durch einen Kompilierer 330 in maschinenlesbare Dateien 321 kompiliert. Die Konfigurationsdatei 312 durchläuft dabei nicht den Kompilierer 330 und steht im Maschinencode 320 ebenfalls unverändert zur Verfügung. Die im Maschinencode 320 befindliche Konfigurationsdatei 312 wird in die maschinenlesbaren Dateien 321 integriert, beispielsweise indem in den maschinenlesbaren Dateien 321 ein Befehl vorgesehen ist, bestimmte Zeilen oder Werte aus der Konfigurationsdatei 312 zu laden und damit auszuführen. Die Konfigurationsdatei 312 kann dabei Informationen über Peripheriegeräte und damit beispielsweise Informationen über eine Treiberauswahl für externe Geräte beinhalten.

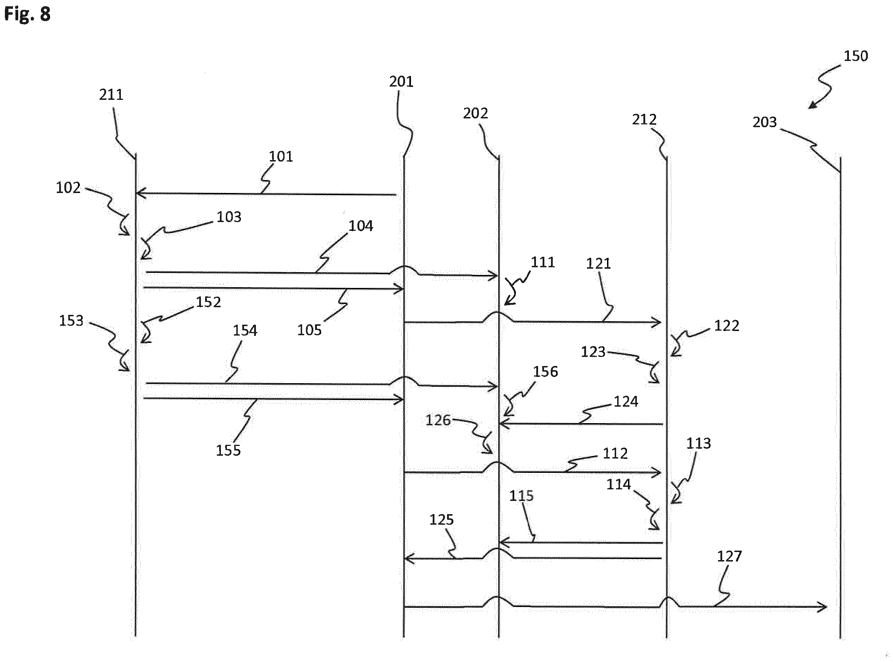

Fig. 8 zeigt einen weiteren zeitlichen Ablauf 150 des Verfahrens, bei dem Verfahrensschritte aus den Figuren 2 und 4 entnommen sind und die, sofern im Folgenden keine Unterschiede beschrieben sind, den Verfahrensschritten der Figuren 2 und 4 entsprechen. Die Verfahrensschritte 101 bis 105 werden zunächst, wie in Fig. 2 beschrieben, ausgeführt. In einem ersten Überprüfungsschritt 111 nach dem vierten Verfahrensschritt 104 wird festgestellt, dass zwischenzeitlich keine weitere Programmversion des Maschinencodes hochgeladen wurde. Aus diesem Grund wird der fünfte Verfahrensschritt 105 ausgeführt. Anschließend wird in einem weiteren ersten Verfahrensschritt 121 die sich nun im ersten Speicher 201 befindliche Kopie des Primärcodes auf eine zweite Bearbeitungsstation 212 heruntergeladen. In einem weiteren zweiten Verfahrensschritt 122, einem weiteren dritten Verfahrensschritt 123 und einem weiteren vierten Verfahrensschritt 124 wird diese Kopie des Primärcodes von einem zweiten Nutzer auf der zweiten Bearbeitungsstation 212 verändert und der daraus erzeugte Maschinencode anschließend in den zweiten Speicher 202 hochgeladen. Gleichzeitig hat der erste Nutzer auf der ersten Bearbeitungsstation 211 einen zusätzlichen zweiten Verfahrensschritt 152 und einen zusätzlichen dritten Verfahrensschritt 153 ausgeführt und damit die erste Programmversion des Maschinencodes weiter verändert. Das Hochladen einer zusätzlichen ersten Programmversion des Maschinencodes durch den ersten Nutzer, also ein zusätzlicher vierte Verfahrensschritt 154 erfolgt vor dem weiteren vierten Verfahrensschritt 124 des zweiten Nutzers. Ferner wird in einem zusätzlichen fünften Verfahrensschritt 155 die weiter veränderte erste Kopie des Primärcodes in den ersten Speicher 201 hochgeladen. Der zusätzliche fünfte Verfahrensschritt 155 erfolgt dabei automatisch, nachdem nach dem Hochladen der zusätzlichen ersten Programmversion des Maschinencodes im zusätzlichen vierten Verfahrensschritt 154 in einem zusätzlichen ersten Überprüfungsschritt 156 festgestellt wurde, dass zwischenzeitlich keine veränderte Programmversion des Maschinencodes hochgeladen wurde. Nach dem Hochladen der durch den zweiten Nutzer veränderten Programmversion des Maschinencodes, welches im weiteren vierten Verfahrensschritt 124 erfolgt, wird in einem weiteren ersten Überprüfungsschritt 126 nun überprüft und festgestellt, dass zwischen dem Herunterladen des Primärcodes im weiteren ersten Verfahrensschritt 121 und dem Hochladen der Programmversion des Maschinencodes im weiteren vierten Verfahrensschritt 124 der Maschinencode durch den zusätzlichen vierten Verfahrensschritt 154 verändert wurde. Folglich wird in einem sechsten Verfahrensschritt 112 die veränderte, im zusätzlichen fünften Verfahrensschritt 155 in den ersten Speicher 201 hochgeladene Primärcodeversion auf die zweite Bearbeitungsstation 212 heruntergeladen und anschließend werden die Verfahrensschritte 113 bis 115, wie für Fig. 4 beschrieben, diesmal jedoch auf der zweiten Bearbeitungsstation 212, durchgeführt. Im neunten Verfahrensschritt 115 wird nun die zusammengeführte Programmversion in den zweiten Speicher 202 hochgeladen und gleichzeitig ein weiterer fünfter Verfahrensschritt 125 automatisch durch dieses Hochladen ausgeführt und dabei die zusammengeführte Kopie des Primärcodes in den ersten Speicher 201 hochgeladen. In einem Synchronisierungsschritt 127 wird nun der Inhalt des ersten Speichers 201 mit einem dritten Speicher 203 synchronisiert. Dies kann beispielsweise dadurch ausgelöst werden, dass der zweite Nutzer an der zweiten Bearbeitungsstation 212 der Ansicht ist, nun einen Meilenstein des Softwareprojekts erreicht zu haben, und ihm deshalb eine weitere Datensicherung sinnvoll erscheint. Der Synchronisierungsschritt 127 kann jedoch auch automatisiert ausgeführt werden, beispielsweise am Ende eines jeden Arbeitstages oder nachts zwischen zwei Arbeitstagen.

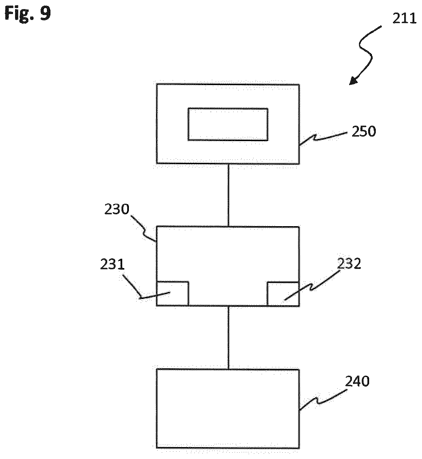

Fig. 9 zeigt eine erste Bearbeitungsstation 211 mit einem zentralen Rechner 230, einer ersten Datenschnittstelle 231, einer zweiten Datenschnittstelle 232 und einer Eingabemöglichkeit 240 für einen Nutzer. Ferner weist die erste Bearbeitungsstation 211 eine optionale Anzeige 250 auf. Alternativ zu dieser Ausgestaltung kann die erste Bearbeitungsstation 211 auch nur aus der zentralen Recheneinheit 230 mit einer ersten Datenschnittstelle 231 bestehen. Über die zweite Datenschnittstelle 232 kann dann ein Remote-Zugriff auf die zentrale Recheneinheit 230 und damit auf die erste Bearbeitungsstation 211 über einen an die zweite Datenschnittstelle 232 angeschlossenen (nicht dargestellten) Rechner erfolgen. Dieser Anschluss kann beispielsweise über ein Netzwerk oder über das Internet erfolgen. An der ersten Datenschnittstelle 231 ist die erste Bearbeitungsstation 211 mit dem ersten (nicht dargestellten) Speicher und dem zweiten (nicht dargestellten) Speicher verbunden. Auch dies kann über eine Netzwerkschnittstelle oder über das Internet erfolgen. Sollten, wie in den Figuren 4 und 8 gezeigt, mehrere Bearbeitungsstationen vorgesehen sein, so können diese analog zur Bearbeitungsstation der Fig. 9 aufgebaut sein. Es kann jedoch auch vorgesehen sein, dass die zentrale Recheneinheit 230 wie beschrieben als Server fungiert und von zwei verschiedenen externen Rechnern aus über die zweite Datenschnittstelle 232 auf die zentrale Recheneinheit 230 zugegriffen wird. Eine solche Verwendung der zentralen Recheneinheit 230 stellt die Nutzung zweier Bearbeitungsstationen im Sinne der vorliegenden Patentanmeldung dar.

Über die Anzeige 250 oder über eine Anzeige einer an die zweite Datenschnittstelle 232 angeschlossenen Recheneinheit können Versionen des im ersten Speicher abgelegten Primärcodes angezeigt werden, sofern vorgesehen ist, mehrere Primärcodeversionen im ersten Speicher abzulegen. Ein Nutzer, der das Softwareprojekt verändern möchte, kann dann aus diesen an der Anzeige 250 angezeigten Versionen auswählen, welche Primärcodeversion er verändern möchte. Dies kann beispielsweise dazu genutzt werden, schon im Vorfeld Änderungen, die sich beispielsweise als nicht funktionierend herausgestellt haben, zu verwerfen und bei der Bearbeitung des Softwareprojekts mit einem älteren Stand zu beginnen.

Der erste Speicher und der zweite Speicher können als zentraler File-Server oder als sogenanntes Git-Repository ausgestaltet sein. Dabei können der erste und zweite Speicher physikalisch auf demselben Speichermedium, beispielsweise einer Festplatte eines Servers, untergebracht sein.

Die beschriebene Bearbeitungsstation und das beschriebene Verfahren zum Verändern und Überarbeiten eines Softwareprojekts kann insbesondere vorteilhaft in der Automatisierungstechnik eingesetzt werden.

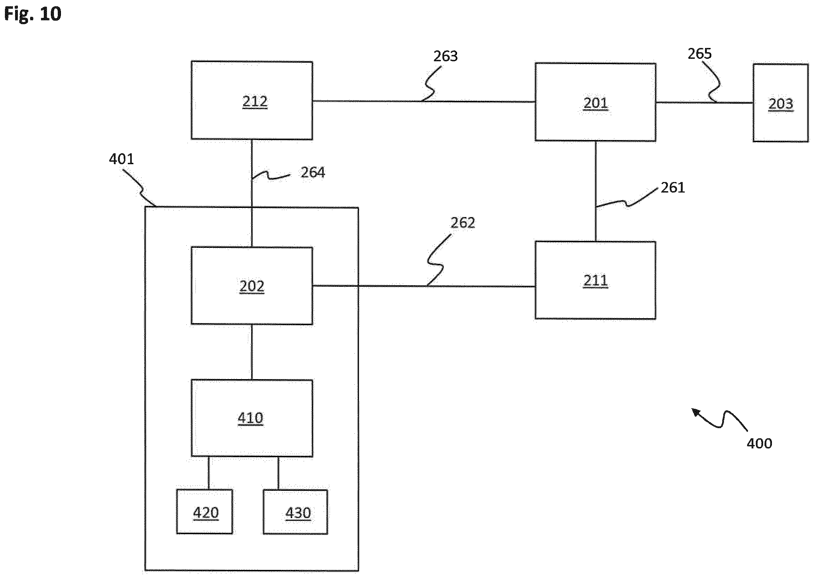

Fig. 10 zeigt ein Automatisierungssystem 400 mit einer Automatisierungskomponente 401 und einer ersten Bearbeitungsstation 211, sowie einen ersten Speicher 201. Ein zweiter Speicher 202 ist der Automatisierungskomponente 401 zugeordnet. Die Speicher 201, 202 sowie die erste Bearbeitungsstation 211 funktionieren dabei so wie voranstehend beschrieben. Die Automatisierungskomponente 401 weist einen Steuerrechner 410 sowie Sensoreingänge 420 und Aktorausgänge 430 auf. Ein auf dem Steuerrechner 410 laufendes Steuerprogramm kann über zumindest einen der Sensoreingänge 420 erfasste Sensordaten einlesen und anhand dieser Sensordaten Aktoren über zumindest einen der Aktorausgänge 430 steuern. Eine solche Automatisierungskomponente 401 kann Teil einer größeren Anlagensteuerung sein, beispielsweise im Rahmen der Gebäudeautomatisierung oder im Bereich der industriellen Steuerung einer Produktionsanlage. Der zweite Speicher 202 ist dem Steuerrechner 410 zugeordnet und mit diesem verbunden. Im zweiten Speicher 202 ist eine Steuersoftware, welche beispielsweise das auf dem Steuerrechner ablaufende Steuerprogramm beinhaltet, des Steuerrechners 410 gespeichert. Diese Steuersoftware stellt dabei ein Softwareprojekt des bisher beschriebenen Verfahrens dar. Insbesondere in der Automatisierungstechnik ist es wichtig, Änderungen an der Steuersoftware so zu implementieren, dass die Automatisierungskomponente 401 möglichst geringe Standzeiten hat. Dadurch ist das beschriebene Verfahren, zu überprüfen, ob sich, während ein erster Nutzer die Steuersoftware bearbeitet hat, ein zweiter Nutzer eine andere Programmversion des Maschinencodes der Steuersoftware in den zweiten Speicher 202 hochgeladen hat, von besonderer Bedeutung. Das Automatisierungssystem 400 der Fig. 10 weist zusätzlich eine zweite Bearbeitungsstation 212 auf. Die erste Bearbeitungsstation 211 ist mit einer ersten Kommunikationsverbindung 261 mit dem ersten Speicher 201 und mit einer zweiten Kommunikationsverbindung 262 mit dem zweiten Speicher 202 verbunden, damit einerseits der Primärcode des Softwareprojekts aus dem ersten Speicher 201 heruntergeladen und andererseits der Maschinencode des Softwareprojekts in den zweiten Speicher 202 hochgeladen werden kann. Die erste Bearbeitungsstation 211 kann, analog zu Fig. 9 eine zentrale Recheneinheit mit einer ersten Datenschnittstelle aufweisen, wobei die Kommunikationsverbindung mit der ersten Datenschnittstelle 231 der zentralen Recheneinheit verbunden sein kann. Über eine dritte Kommunikationsverbindung 263 ist die zweite Bearbeitungsstation 212 mit dem ersten Speicher 201 verbunden. Über eine vierte Kommunikationsverbindung 264 ist die zweite Bearbeitungsstation 212 mit dem zweiten Speicher 202 verbunden. Der erste Speicher 201 ist über eine optionale fünfte Kommunikationsverbindung 265 mit einem dritten Speicher 203 verbunden. Dies kann der Durchführung des in Fig. 8 beschriebenen Synchronisationsschritts dienen. Falls eine zusätzliche Speicherung im dritten Speicher 203 nicht erforderlich ist, können der dritte Speicher 203 und die fünfte Kommunikationsverbindung 265 weggelassen werden. Wird auf die zweite Bearbeitungsstation 212 verzichtet, können die dritte und vierte Kommunikationsverbindung 263, 264 ebenfalls weggelassen werden. In einem solchen Automatisierungssystem 400 kann das beschriebene Verfahren durchgeführt werden und dadurch die Ausfallzeiten der Automatisierungskomponente 401 verringert werden und gleichzeitig erreicht werden, dass von mehreren Bearbeitungsstationen 211, 212 an der Steuersoftware beziehungsweise an dem Softwareprojekt für den Steuerrechner 410 gearbeitet werden kann.

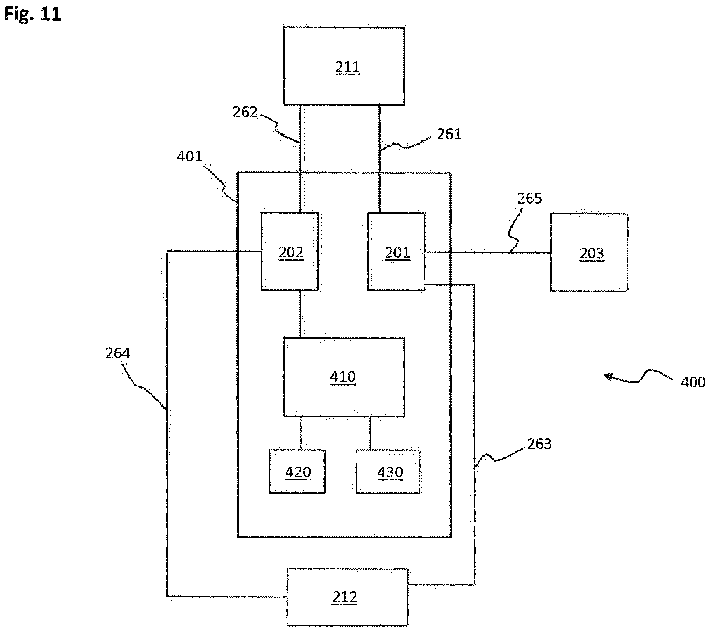

Fig. 11 zeigt ein weiteres Ausführungsbeispiel eines Automatisierungssystems 400, welches dem Automatisierungssystem der Fig. 10 entspricht, sofern im Folgenden keine Unterschiede beschrieben sind. In dieser Ausgestaltung des Automatisierungssystems 400 ist auch der erste Speicher 201 der Automatisierungskomponente 401 zugeordnet. Der erste Speicher 201 und der zweite Speicher 202 können dabei auf einer identischen Festplatte oder auf unterschiedlichen Festplatten oder auf identischen oder unterschiedlichen Speichermöglichkeiten in der ersten Automatisierungskomponente 401 untergebracht werden.

Der erste Speicher 201, der zweite Speicher 202 sowie der dritte Speicher 203 können als Git-Repository oder aber auch als eine andere Möglichkeit der dezentralen Versionsverwaltung ausgestaltet sein.

### Bezugszeichenliste

- 100: Ablaufdiagramm
- 101: erster Verfahrensschritt
- 102: zweiter Verfahrensschritt
- 103: dritter Verfahrensschritt
- 104: vierter Verfahrensschritt
- 105: fünfter Verfahrensschritt
- 106: weiterer Hochladeschritt
- 111: erster Überprüfungsschritt
- 112: sechster Verfahrensschritt
- 113: siebter Verfahrensschritt
- 114: achter Verfahrensschritt
- 115: neunter Verfahrensschritt
- 121: weiterer erster Verfahrensschritt
- 122: weiterer zweiter Verfahrensschritt
- 123: weiterer dritter Verfahrensschritt
- 124: weiterer vierter Verfahrensschritt
- 125: weiterer fünfter Verfahrensschritt
- 126: weiterer Überprüfungsschritt
- 127: Synchronisierungsschritt
- 131: zweiter Überprüfungsschritt
- 132: erster Entscheidungsschritt
- 133: dritter Überprüfungsschritt
- 134: Überschreibungsschritt
- 135: zweiter Entscheidungsschritt
- 141: erster Pfad
- 142: zweiter Pfad
- 143: dritter Pfad
- 144: vierter Pfad
- 145: fünfter Pfad
- 146: sechster Pfad
- 150: zeitlicher Ablaufplan
- 152: zusätzlicher zweiter Verfahrensschritt
- 153: zusätzlicher dritter Verfahrensschritt
- 154: zusätzlicher vierter Verfahrensschritt
- 155: zusätzlicher fünfter Verfahrensschritt
- 156: zusätzlicher erster Überprüfungsschritt
- 201: erster Speicher
- 202: zweiter Speicher
- 203: dritter Speicher
- 211: erste Bearbeitungsstation
- 212: zweite Bearbeitungsstation
- 230: zentrale Recheneinheit
- 231: erste Datenschnittstelle
- 232: zweite Datenschnittstelle
- 240: Eingabemöglichkeit
- 250: optionale Anzeige
- 261: erste Kommunikationsverbindung
- 262: zweite Kommunikationsverbindung
- 263: dritte Kommunikationsverbindung
- 264: vierte Kommunikationsverbindung
- 265: fünfte Kommunikationsverbindung
- 300: Softwareprojekt
- 310: Primärcode
- 311: Quelldatei
- 312: Konfigurationsdatei
- 320: Maschinencode
- 321: maschinenlesbare Datei
- 330: Kompilierer
- 400: Automatisierungssystem
- 401: Automatisierungskomponente
- 410: Steuerrechner
- 420: Sensoreingang
- 430: Aktorausgang

## Patentansprüche

1. Verfahren (100) zum Bearbeiten eines aus einem Primärcode (310) und einem Maschinencode (320) bestehenden Softwareprojekts (300) auf einer ersten Bearbeitungsstation (211) durch einen ersten Nutzer mit den folgenden Verfahrensschritten, wobei die Verfahrensschritte in der angegebenen Reihenfolge durchgeführt werden:
- Herunterladen (101) einer ersten Kopie des Primärcodes (310) aus einem ersten Speicher (201) auf die erste Bearbeitungsstation (211);
- Verändern (102) der ersten Kopie des Primärcodes (310) ;
- Erzeugung (103) einer ersten Programmversion des Maschinencodes (320), wobei die erste Programmversion des Maschinencodes (320) aus der ersten Kopie des Primärcodes (310) erzeugt wird;
- Hochladen (104) der ersten Programmversion des Maschinencodes (320) in einen zweiten Speicher (202); und,
- Automatisches Hochladen (105) der veränderten Kopie des Primärcodes (310) in den ersten Speicher (201), ausgelöst durch das Hochladen der ersten Programmversion des Maschinencodes (320) in den zweiten Speicher (202);
**gekennzeichnet durch** die folgenden Verfahrensschritte:
- Überprüfen (111), ob zwischen dem Herunterladen (101) der ersten Kopie des Primärcodes (310) und dem Hochladen (104) der ersten Programmversion des Maschinencodes (320) in den zweiten Speicher (202) eine aus einer zweiten Kopie des Primärcodes (310) erzeugte zweite Programmversion des Maschinencodes (320) in den zweiten Speicher (202) hochgeladen wurde;
- Herunterladen (112) einer veränderten zweiten Kopie des Primärcodes (310) aus dem ersten Speicher (201), falls bei dem Überprüfen (111) festgestellt wird, dass eine zweite Programmversion des Maschinencodes (320) in den zweiten Speicher (202) hochgeladen wurde;
- Ausgabe (113) einer Aufforderung an den ersten Nutzer, die erste Kopie des Primärcodes (310) und die zweite Kopie des Primärcodes (310) zu einer dritten Kopie des Primärcodes (310) zusammenzuführen;
sowie einem der beiden folgenden Verfahrensschritte:
- Erzeugung (114) einer dritten Programmversion des Maschinencodes (320) aus der dritten Kopie des Primärcodes, Hochladen (115) der dritten Programmversion des Maschinencodes (320) in den zweiten Speicher, wobei das automatische Hochladen (105) der veränderten Kopie des Primärcodes (310) in den ersten Speicher (201) als Hochladen der dritten Kopie des Primärcodes (310) in den ersten Speicher (201) ausgestaltet ist; oder
- Überschreiben (134) der zweiten Programmversion des Maschinencodes (320) mit der ersten Programmversion des Maschinencodes (320), ausgelöst durch eine Reaktion des ersten Nutzers auf die ausgegebene Aufforderung (113), wobei das automatische Hochladen der veränderten Kopie des Primärcodes (310) in den ersten Speicher (201) als Hochladen der veränderten ersten Kopie des Primärcodes (310) in den ersten Speicher (201) ausgestaltet ist

2. Verfahren (100) nach Anspruch 1, wobei das Hochladen (104) der ersten Programmversion des Maschinencodes (320) abgebrochen wird, bevor die Aufforderung an den ersten Nutzer ausgegeben wird.

3. Verfahren (100) nach Anspruch 1 oder 2, wobei zusätzlich die veränderte erste Kopie des Primärcodes (310) in den ersten Speicher (201) hochgeladen wird.

4. Verfahren (100) nach einem der Ansprüche 1 bis 3, wobei das Überprüfen anhand eines Zeitstempels der Programmversionen des Maschinencodes (320) erfolgt.

5. Verfahren (100) nach einem der Ansprüche 1 bis 3, wobei das Überprüfen anhand eines Hash-Wertes der Programmversionen des Maschinencodes (320) erfolgt.

6. Verfahren (100) nach einem der Ansprüche 1 bis 5, wobei die Erzeugung der Programmversionen des Maschinencodes (320) durch ein Kompilieren der Kopien des Primärcodes (310) erfolgt.

7. Verfahren (100) nach einem der Ansprüche 1 bis 6, wobei das Softwareprojekt (300) eine Konfigurationsdatei (312) umfasst, wobei die Konfigurationsdatei (312) ein Teil des Primärcodes (310) ist, wobei die Konfigurationsdatei (312) in die Programmversionen des Maschinencodes (320) integriert wird, wobei das Verändern der ersten Kopie des Primärcodes (310) eine Veränderung der Konfigurationsdatei (312) umfasst, wobei die veränderte Konfigurationsdatei (312) in den zweiten Speicher (202) hochgeladen wird.

8. Verfahren (100) nach einem der Ansprüche 1 bis 7, wobei im ersten Speicher (201) mehrere Primärcodeversionen abgelegt sind, und wobei an der ersten Bearbeitungsstation (211) eine Anzeige (250) der im ersten Speicher (201) abgelegten Primärcodeversionen abrufbar ist.

9. Verfahren (100) nach einem der Ansprüche 1 bis 8, wobei eine oder mehrere Primärcodeversionen aus dem ersten Speicher (201) mit einem dritten Speicher (203) gemäß einer Vorgabe, insbesondere einer Nutzereingabe oder automatisiert, synchronisiert werden.

10. Verfahren (100) nach einem der Ansprüche 1 bis 9, wobei das Softwareprojekt (300) ein Automatisierungsprojekt ist, wobei der Maschinencode (320) zur Steuerung einer Automatisierungskomponente(401) dient, und wobei der zweite Speicher (202) in der Automatisierungskomponente (401) angeordnet ist.

11. Verfahren (100) nach Anspruch 10, wobei der erste Speicher (201) in der Automatisierungskomponente (401) angeordnet ist.

12. Bearbeitungsstation (211) mit einer ersten Datenschnittstelle (231) und einer Eingabemöglichkeit (240) für einen Nutzer, wobei die Bearbeitungsstation (211) eingerichtet ist, das Verfahren (100) nach einem der Ansprüche 1 bis 11 durchzuführen.

13. Automatisierungssystem (400) mit einem ersten Speicher (201), einer Automatisierungskomponente (401) mit einem zweiten Speicher (202) und mindestens einer Bearbeitungsstation (211) nach Anspruch 12, wobei eine erste Kommunikationsverbindung (261) zwischen dem ersten Speicher (201) und der Bearbeitungsstation (211) und eine zweite Kommunikationsverbindung (262) zwischen der Bearbeitungsstation (211) und dem zweiten Speicher (202) eingerichtet sind.

## Claims

1. Method (100) for a first user to process a software project (300) consisting of a primary code (310) and a machine code (320) on a first processing station (211) using the following method steps, the method steps being performed in the order indicated:
- downloading (101) a first copy of the primary code (310) from a first memory (201) onto the first processing station (211);
- altering (102) the first copy of the primary code (310) ;
- producing (103) a first program version of the machine code (320), wherein the first program version of the machine code (320) is produced from the first copy of the primary code (310);
- uploading (104) the first program version of the machine code (320) to a second memory (202); and
- automatically uploading (105) the altered copy of the primary code (310) to the first memory (201), triggered by the uploading of the first program version of the machine code (320) to the second memory (202);
**characterized by** the following method steps:
- checking (111) whether a second program version of the machine code (320), produced from a second copy of the primary code (310), was uploaded to the second memory (202) between the downloading (101) of the first copy of the primary code (310) and the uploading (104) of the first program version of the machine code (320) to the second memory (202);
- downloading (112) an altered second copy of the primary code (310) from the first memory (201) if the checking (111) reveals that a second program version of the machine code (320) was uploaded to the second memory (202);
- outputting (113) a request to the first user to combine the first copy of the primary code (310) and the second copy of the primary code (310) to form a third copy of the primary code (310);
and one of the following two method steps:
- producing (114) a third program version of the machine code (320) from the third copy of the primary code, uploading (115) the third program version of the machine code (320) to the second memory, wherein the automatic uploading (105) of the altered copy of the primary code (310) to the first memory (201) is configured as uploading of the third copy of the primary code (310) to the first memory (201); or
- overwriting (134) the second program version of the machine code (320) with the first program version of the machine code (320), triggered by a reaction by the first user to the request (113) that is output, wherein the automatic uploading of the altered copy of the primary code (310) to the first memory (201) is configured as uploading of the altered first copy of the primary code (310) to the first memory (201).

2. Method (100) according to Claim 1, wherein the uploading (104) of the first program version of the machine code (320) is aborted before the request is output to the first user.

3. Method (100) according to Claim 1 or 2, wherein additionally the altered first copy of the primary code (310) is uploaded to the first memory (201).

4. Method (100) according to one of Claims 1 to 3, wherein the checking is effected on the basis of a timestamp of the program versions of the machine code (320) .

5. Method (100) according to one of Claims 1 to 3, wherein the checking is effected on the basis of a hash value of the program versions of the machine code (320) .

6. Method (100) according to one of Claims 1 to 5, wherein the program versions of the machine code (320) are produced by a compiling of the copies of the primary code (310).

7. Method (100) according to one of Claims 1 to 6, wherein the software project (300) comprises a configuration file (312), wherein the configuration file (312) is a part of the primary code (310), wherein the configuration file (312) is integrated in the program versions of the machine code (320), wherein the altering of the first copy of the primary code (310) comprises an alteration of the configuration file (312), wherein the altered configuration file (312) is uploaded to the second memory (202).

8. Method (100) according to one of Claims 1 to 7, wherein the first memory (201) stores multiple primary code versions, and wherein a display (250) of the primary code versions stored in the first memory (201) is retrievable on the first processing station (211).

9. Method (100) according to one of Claims 1 to 8, wherein one or more primary code versions from the first memory (201) are synchronized with a third memory (203) according to a stipulation, in particular a user input, or in automated fashion.

10. Method (100) according to one of Claims 1 to 9, wherein the software project (300) is an automation project, wherein the machine code (320) is used to control an automation component (401), and wherein the second memory (202) is arranged in the automation component (401).

11. Method (100) according to Claim 10, wherein the first memory (201) is arranged in the automation component (401).

12. Processing station (211) having a first data interface (231) and an input facility (240) for a user, wherein the processing station (211) is configured to perform the method (100) according to one of Claims 1 to 11.

13. Automation system (400) having a first memory (201), an automation component (401) having a second memory (202) and at least one processing station (211) according to Claim 12, wherein a first communication connection (261) is set up between the first memory (201) and the processing station (211) and a second communication connection (262) is set up between the processing station (211) and the second memory (202).

## Revendications

1. Procédé (100) permettant de traiter un projet de logiciel (300) composé de code primaire (310) et de code machine (320) sur une première station de traitement (211) par un premier utilisateur, comprenant les étapes de procédé suivantes, les étapes de procédé étant effectuées dans l'ordre indiqué :
- téléchargement vers l'aval (101) d'une première copie du code primaire (310) à partir d'une première mémoire (201) sur la première station de traitement (211) ;
- modification (102) de la première copie du code primaire (310) ;
- génération (103) d'une première version de programme du code machine (320), la première version de programme du code machine (320) étant générée à partir de la première copie du code primaire (310) ;
- téléchargement vers l'amont (104) de la première version de programme du code machine (320) dans une deuxième mémoire (202) ; et
- téléchargement automatique vers l'amont (105) de la copie modifiée du code primaire (310) dans la première mémoire (201), suite au téléchargement vers l'amont de la première version de programme du code machine (320) dans la deuxième mémoire (202) ;
**caractérisé par** les étapes de procédé suivantes :
- vérification (111) si entre le téléchargement vers l'aval (101) de la première copie du code primaire (310) et le téléchargement vers l'amont (104) de la première version de programme du code machine (320) dans la deuxième mémoire (202), une deuxième version de programme du code machine (320), générée à partir d'une deuxième copie du code primaire (310), a été téléchargée vers l'amont dans la deuxième mémoire (202) ;
- téléchargement (112) d'une deuxième copie modifiée du code primaire (310) à partir de la première mémoire (201) s'il est déterminé lors de la vérification (111) qu'une deuxième version de programme du code machine (320) a été téléchargée vers l'amont dans la deuxième mémoire (202) ;
- émission (113) d'une demande à l'intention du premier utilisateur de fusionner la première copie du code primaire (310) et la deuxième copie du code primaire (310) en une troisième copie du code primaire (310) ;
ainsi que par l'une des deux étapes de procédé suivantes :
- génération (114) d'une troisième version de programme du code machine (320) à partir de la troisième copie du code primaire, télécharger vers l'amont (115) la troisième version de programme du code machine (320) dans la deuxième mémoire, le téléchargement automatique vers l'amont (105) de la copie modifiée du code primaire (310) dans la première mémoire (201) étant conçu comme le téléchargement vers l'amont de la troisième copie du code primaire (310) dans la première mémoire (201) ; ou
- écrasement (134) de la deuxième version de programme du code machine (320) par la première version de programme du code machine (320), suite à une réaction du premier utilisateur à la demande émise (113), le téléchargement automatique vers l'amont de la copie modifiée du code primaire (310) dans la première mémoire (201) étant conçu comme le téléchargement vers l'amont de la première copie modifiée du code primaire (310) dans la première mémoire (201).

2. Procédé (100) selon la revendication 1, dans lequel le téléchargement vers l'amont (104) de la première version de programme du code machine (320) est abandonné avant que la demande ne soit émise à l'intention du premier utilisateur.

3. Procédé (100) selon la revendication 1 ou 2, dans lequel de plus la première copie modifiée du code primaire (310) est téléchargée vers l'amont dans la première mémoire (201).

4. Procédé (100) selon l'une quelconque des revendications 1 à 3, dans lequel la vérification est effectuée à l'aide d'un horodatage des versions de programme du code machine (320).

5. Procédé (100) selon l'une quelconque des revendications 1 à 3, dans lequel la vérification est effectuée à l'aide d'une valeur de hachage des versions de programme du code machine (320).

6. Procédé (100) selon l'une quelconque des revendications 1 à 5, dans lequel la génération des versions de programme du code machine (320) est effectuée par compilation des copies du code primaire (310) .

7. Procédé (100) selon l'une quelconque des revendications 1 à 6, dans lequel le projet de logiciel (300) comprend un fichier de configuration (312), le fichier de configuration (312) faisant partie du code primaire (310), le fichier de configuration (312) étant intégré dans les versions de programme du code machine (320), la modification de la première copie du code primaire (310) comprenant une modification du fichier de configuration (312), le fichier de configuration (312) modifié étant téléchargé vers l'amont dans la deuxième mémoire (202).

8. Procédé (100) selon l'une quelconque des revendications 1 à 7, dans lequel plusieurs versions de code programme sont stockées dans la première mémoire (201), et dans lequel un affichage (250) des versions de code primaire stockées dans la première mémoire (201) peut être consulté sur la première station de traitement (211).

9. Procédé (100) selon l'une quelconque des revendications 1 à 8, dans lequel une ou plusieurs versions de code primaire provenant de la première mémoire (201) sont synchronisées avec une troisième mémoire (203) selon une spécification, en particulier selon une entrée d'utilisateur ou de manière automatisée.

10. Procédé (100) selon l'une quelconque des revendications 1 à 9, dans lequel le projet de logiciel (300) est un projet d'automatisation, dans lequel le code machine (320) sert à commander un composant d'automatisation (401), et dans lequel la deuxième mémoire (202) est disposée sur le composant d'automatisation (401).

11. Procédé (100) selon la revendication 10, dans lequel la première mémoire (201) est disposée dans le composant d'automatisation (401).

12. Station de traitement (211), comprenant une première interface de données (231) et une option de saisie (240) pour un utilisateur, la station de traitement (211) étant aménagée pour effectuer le procédé (100) selon l'une quelconque des revendications 1 à 11.

13. Système d'automatisation (400), comprenant une première mémoire (201), un composant d'automatisation (401) doté d'une deuxième mémoire (202) et au moins une station de traitement (211) selon la revendication 12, une première liaison de communication (261) étant établie entre la première mémoire (201) et la station de traitement (211), et une deuxième liaison de communication (262) étant établie entre la station de traitement (211) et la deuxième mémoire (202).
